# DEMANDE DE BREVET EUROPEEN

(11) **EP 1 890 493 A1**
(43) Date de publication de la demande: **20.02.2008**
(21) Numéro de dépôt: 06119127.6
(22) Date de dépôt: 17.08.2006
(51) Int. Cl.: H04N 7/167, H04L 9/08

(54) **Méthode de révocation de modules de sécurité utilisés pour sécuriser des messages diffusés**

(71) Demandeur: Nagracard S.A., 1033 Cheseaux-sur-Lausanne (CH)
(72) Inventeur: Junod, Pascal, 1004, Lausanne (CH)
(74) Mandataire: Wenger, Joel-Théophile

(57) **Abrégé**

Le but de la présente invention est de proposer une méthode pour empêcher l'utilisation abusive de données à accès conditionnels, en particulier au moyen de clones de modules de sécurité dont la sécurité a été compromise.

Ce but est atteint par une méthode de révocation de modules de sécurité destinés à recevoir des messages de sécurité diffusés à une pluralité de modules de sécurité, ledit modules de sécurité comprenant au moins une clé personnelle, cette méthode comprenant les étapes, préalablement à la révocation :
- division de l'ensemble des modules de sécurité en au moins deux groupes,
- détermination, pour chaque groupe, d'une clé asymétrique comprenant une clé publique et une pluralité de clés privées,
- chargement d'une clé privée par module de sécurité,
- transmission d'un message de sécurité par groupe, ledit message étant encrypté par la clé publique dudit groupe;
la révocation consistant dans les étapes suivantes :
- envoi à chaque membre du même groupe que le module de sécurité à révoquer, à l'exception du ou des modules de sécurité à révoquer, d'une nouvelle clé privée correspondant à la clé publique d'un autre groupe, chaque clé privée étant encryptée par la clé personnelle dudit module de sécurité.

## Description

### Introduction

La présente invention concerne le domaine de la sécurité de modules de sécurité, ces modules étant destinés à contenir des informations personnelles et secrètes permettent l'accès à des services ou à des prestations.

Cette invention s'applique plus précisément au domaine de la télévision à péage, dans laquelle un contenu est diffusé sous forme chiffrée, le déchiffrement de ce contenu étant autorisé à des conditions déterminées.

### Etat de la technique

De façon bien connue, pour pouvoir visionner un événement de télévision à péage, tel qu'un film, un événement sportif ou un jeu notamment, plusieurs flux sont diffusés à destination d'une unité multimédia, par exemple d'un décodeur. Ces flux sont notamment d'une part le fichier de l'événement sous forme d'un flux de données chiffrées et d'autre part, un flux de messages de contrôle permettant le déchiffrement du flux de données. Le contenu du flux de données est chiffré par des "mots de contrôle" (Control words = cw), renouvelés régulièrement. Le deuxième flux est appelé flux ECM (Entitlement Control Message) et peut être formé de deux manières différentes. Selon une première manière, les mots de contrôle sont chiffrés par une clé, dite clé de transmission TK, qui est généralement propre au système de transmission entre le centre de gestion et un module de sécurité associé au récepteur/décodeur. Le mot de contrôle est obtenu en déchiffrant les messages de contrôle au moyen de la clé de transmission TK.

Selon une deuxième manière, le flux ECM ne contient pas directement les mots de contrôle chiffrés, mais contient des informations permettant de déterminer les mots de contrôle. Cette détermination des mots de contrôle peut se faire par différentes opérations, en particulier par déchiffrement, ce déchiffrement pouvant aboutir directement au mot de contrôle, ce qui correspond à la première manière décrite ci-dessus, mais le déchiffrement pouvant également aboutir à une donnée qui contient le mot de contrôle, celui-ci devant encore être extrait de la donnée. En particulier, la donnée peut contenir le mot de contrôle ainsi qu'une valeur associée au contenu à diffuser, et notamment les conditions d'accès à ce contenu. Une autre opération permettant la détermination du mot de contrôle peut utiliser par exemple une fonction de hachage à sens unique de cette information notamment.

Les opérations de sécurité sont généralement effectuées dans un module de sécurité associé à l'unité multimédia ou au décodeur. Un tel module de sécurité peut être réalisé en particulier selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclu pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Lors du déchiffrement d'un message de contrôle (ECM), il est vérifié, dans le module de sécurité, que le droit pour accéder au contenu considéré est présent. Ce droit peut être géré par des messages d'autorisation (EMM = Entitlement Management Message) qui chargent un tel droit dans le module de sécurité.

La diffusion de données numériques à accès conditionnel est schématiquement divisée en trois modules. Le premier module est en charge du chiffrement des données numériques par les mots de contrôle cw et de la diffusion de ces données.

Le deuxième module prépare les messages de contrôle ECM contenant les mots de contrôle cw, ainsi que les conditions d'accès et les diffuse à l'intention des utilisateurs.

Le troisième module quant à lui prépare et transmet les messages d'autorisation EMM qui sont en charge de définir les droits de réception dans les modules de sécurité connectés aux récepteurs.

Alors que les deux premiers modules sont généralement indépendants des destinataires, le troisième module gère l'ensemble des utilisateurs et diffuse des informations à l'intention d'un utilisateur, d'un groupe d'utilisateurs ou tous les utilisateurs.

Une des méthodes pour contourner la sécurité, qui est certes lourde, mais réalisable, consiste à analyser le contenu d'un module de sécurité autorisé (reverse engineering) afin d'imiter la partie sécurité (déchiffrement des messages) tout en court-circuitant la partie vérification des droits. Il est ainsi possible de réaliser un "clone" d'un module de sécurité réel. Un tel clone disposera donc de la clé de transmission, ce qui lui permettra de déchiffrer les mots de contrôle cw contenus dans les messages de contrôle ECM. Comme les droits ne sont pas vérifiés dans ce clone, il fonctionnera comme l'original pour ce qui concerne les moyens de déchiffrement sans pour autant qu'il soit nécessaire de disposer des droits pour réaliser ce déchiffrement.

Dans un système de télévision à péage, il est possible de changer de clé de transmission. Pour ceci, deux méthodes sont en principe utilisables. La première consiste à diffuser la nouvelle clé de transmission à destination de tous les décodeurs. Ceux-ci peuvent alors se mettre à jour de sorte que dès que la nouvelle clé est utilisée, ils peuvent déchiffrer les événements. Ce type de mise à jour ne permet pas d'exclure un décodeur cloné car il pourra recevoir également les messages de mise à jour puisqu'il dispose des clés de déchiffrement afférentes.

Du fait que chaque module de sécurité comprend au moins une clé unique, la deuxième approche consiste à transmettre la nouvelle clé de transmission dans un message crypté par cette clé unique. Dans ce cas, le nombre de messages est au minimum égal au nombre de modules de sécurité installés afin de renouveler individuellement cette clé de transmission. Il est connu que si un module est déclenché, (c'est-à-dire si l'appareil hôte n'est pas alimenté), il ne recevra pas un tel message et ne pourra plus offrir à l'utilisateur les services auxquels il aurait légitiment droit. Pour pallier à cela, lors d'un envoi d'un message destiné à un module, ce message est répété un grand nombre de fois afin d'être sûr que son destinataire l'a bien reçu.

Du fait de la bande passante disponible et pour s'assurer que chaque abonné a bien reçu la nouvelle clé, il est nécessaire de transmettre le message bien avant que cette nouvelle clé ne soit utilisée, par exemple un mois à l'avance.

Dès lors, le possesseur d'un module clone va s'adresser au technicien qui lui a fournit un tel clone et qui dispose de moyens pour extraire la nouvelle clé de transmission d'un module authentique. Une fois la clé mise à disposition, par exemple sur Internet, tous les clones peuvent alors être mis à jour avant même que la nouvelle clé ne soit activée. De cette manière, les clones restent toujours opérationnels.

Il en résulte que l'envoi de clés de transmission aussi bien par transmission globale qu'individuelle présentent des inconvénients et ne permettent pas d'éliminer un module cloné.

### Brève description de l'invention

Ainsi, le but de la présente invention est de proposer une méthode pour empêcher l'utilisation abusive de données à accès conditionnels, en particulier au moyen de clones de modules de sécurité dont la sécurité a été compromise.

Ce but est atteint par une méthode de révocation de modules de sécurité destinés à recevoir des messages de sécurité diffusés à une pluralité de modules de sécurité, ledit modules de sécurité comprenant au moins une clé personnelle, cette méthode comprenant les étapes, préalablement à la révocation :
- division de l'ensemble des modules de sécurité en au moins deux groupes,
- détermination, pour chaque groupe, d'une clé asymétrique comprenant une clé publique et une pluralité de clés privées,
- chargement d'une clé privée par module de sécurité,
- transmission d'un message de sécurité par groupe, ledit message étant encrypté par la clé publique dudit groupe;
la révocation consistant dans les étapes suivantes :
- envoi à chaque membre du même groupe que le module de sécurité à révoquer, à l'exception du ou des modules de sécurité à révoquer, d'une nouvelle clé privée correspondant à la clé publique d'un autre groupe, chaque clé privée étant encryptée par la clé personnelle dudit module de sécurité.

Un exemple de génération des clés asymétriques de groupe utilise le système de Boneh-Franklin (Dan Boneh, Matthew K. Franklin: An Efficient Public Key Traitor Tracing Scheme. CRYPTO 1999: 338-353). Pour une clé publique, il est possible de générer une pluralité de clés privées, chacune permettant de décrypter le message encrypté par la clé publique.

Ceci nous permet de placer une clé différente dans chaque module de sécurité tout en envoyant un nombre limité de messages différents.

### Brève description des figures

L'invention sera mieux comprise grâce à la description détaillée qui va suivre et qui se réfère aux dessins annexés qui sont donnés à titre d'exemple nullement limitatif, dans lesquels :
- la figure 1 illustre schématiquement un émetteur et un récepteur de télévision à péage,
- la figure 2 illustre la répartition en 4 groupes comprenant chacun 3 modules de sécurité,
- la figure 3 illustre la répartition des groupes après la révocation d'un module de sécurité.

### Description détaillée

Dans le domaine de la diffusion de messages de sécurité, préparé en envoyé depuis un centre de gestion CG à une pluralité d'unité multimédia STB, on doit faire face au compromis de l'adressage global, soit le même message pour toutes les unités, ou l'adressage individuel, soit un message pour chaque unité.

Dans le premier cas, le système est rapide car un seul message permet par exemple de changer la clé de transmission. Cette clé est celle qui encrypte les messages contenant les mots de contrôle CW.

On imagine les conséquences du second cas s'il faut régulièrement transmettre des informations à chaque module de sécurité.

C'est pourquoi la solution selon l'invention est de diviser l'ensemble des modules de sécurité en groupes, chaque groupe pouvant contenir plusieurs centaines de modules. Selon une variante, chaque groupe comprend 256 membres. De ce fait, 1 million d'abonnés représente env. 4000 groupes, donc 4000 messages pour renouveler la clé de transmission ou mettre à jour un programme de sécurité.

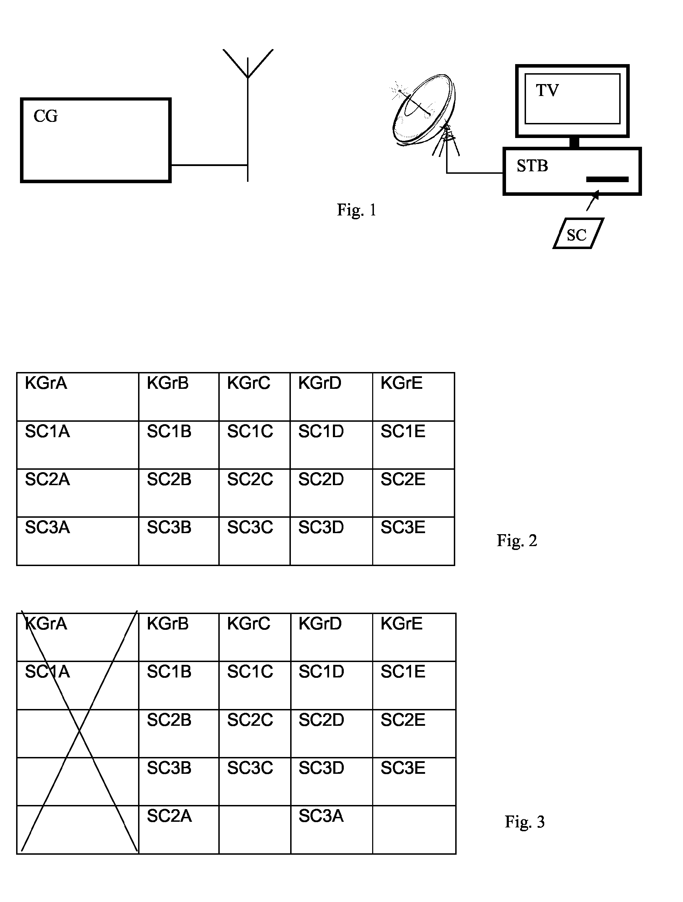

Le centre de gestion CG envoie les messages de sécurité à destination des unités multimédia STB. Ces unités STB comprennent des moyens de sécurité SC, illustré sur la figure 1 par une carte à puce enfichable.

Lors de la personnalisation d'un tel module de sécurité, on y place des clés secrètes propres à chaque module. Chaque module de sécurité porte un numéro d'identification UA qui permettra de tracer les clés secrètes introduites dans un module.

Le centre de gestion CG dispose d'une base de données avec pour chaque module de sécurité, la liste des clés personnelles.

La mise en groupe peut se faire soit à la personnalisation du module (en général avant la livraison) ou lors de la mise en route sur site. Selon notre invention, une clé ou une information est nécessaire pour accéder aux services contrôlés par le centre de gestion. Ceci peut être une étape supplémentaire et indépendante à la gestion des droits. Le fait que la clé ou l'information soit accessible à tous les modules de sécurité ne signifie pas que les services soient accessibles aux abonnés disposant de ces modules de sécurité.

Comme indiqué précédemment, un module de sécurité est assigné à un groupe, par exemple le groupe GrA. Cette assignation peut se faire soit lors de l'initialisation du module, soit par l'envoi de la clé privée personnelle correspondant au groupe GrA. L'envoi de cette clé est sécurisé par l'encryption de ladite clé par une des clés personnelle du module de sécurité. Selon l'exemple de la figure 2, les modules de sécurité SC1A, SC2A et SC3A font partie de ce groupe GrA. Les informations secrètes sont encryptées par la clé KGrA dans le centre de gestion CG et déchiffrées par chaque clé privée des modules de sécurité.

De la même manière, d'autres groupes GrB, GrC ou GrD comprennent également des modules de sécurité SC..B, SC..C ou SC..D.

Ainsi, l'ensemble des modules de sécurité reçoit les informations secrètes nécessaires au bon fonctionnement du système d'accès conditionnel par l'envoi d'autant de messages différents qu'il y a de groupe.

Lors de la détection d'un clone de module de sécurité, par exemple si un tel module a été compromis par l'extraction des clés, la clé privé personnelle va se retrouver dans tous les clones.

Une fois un clone connu, il est possible de déterminer quel est le module de sécurité qui a été compromis par la comparaison de la clé privée de ce module clone avec les clés privées stockées dans le centre de gestion. Le centre de gestion garde une copie de la clé privée chargée dans chaque module de sécurité. Selon notre exemple, le module à révoquer est le module SC1A. Le groupe GrA va donc disparaître car il n'est plus possible d'envoyer des messages secrets encrypté par la clé publique KGrA. Avant de stopper l'envoi des messages encryptés par la clé de groupe KGrA, tous les modules de sécurité, à l'exception du module de sécurité corrompus, va devoir changer de groupe.

Dans l'exemple de la figure 3, le module de sécurité SC2A est déplacé dans le groupe B, le module SC2A est déplacé dans le groupe D. Cette opération se fait par l'envoi de la clé de groupe de sa nouvelle affectation. Cette clé de groupe est encryptée par une clé personnelle du module de sécurité afin que ce message ne puisse être interprété que par le module de sécurité concerné. Une fois que le groupe compromis est vidé de ses membres non corrompus, l'envoi des messages avec la clé du groupe A est interrompu. A ce moment, tous les clones cessent d'être opérationnels car ne pouvant plus recevoir les informations secrètes.

Le déplacement des membres non révoqués vers d'autres groupes peut de faire soit vers des groupes existants, soit par la création d'un nouveau groupe.

Les informations secrètes peuvent prendre plusieurs formes. Le document W00156287 décrit une méthode pour combiner des informations pour l'obtention du mot de contrôle. Les informations secrètes pourraient être soit le super mot de contrôle qui sera combiné avec les mots de contrôle CW contenus dans les messages de contrôle, soit la clé pour décrypter le message contenant le super mot de contrôle.

Une autre forme des informations secrètes est une forme de clé de transmission. Cette clé sert à décrypter les messages de contrôle ECM et d'en extraire les mots de contrôle. Cette clé de transmission est par exemple changée tous les mois.

Dans la pratique, lors d'un changement de clé de transmission par exemple, l'envoi de la nouvelle clé à tous les modules de sécurité peut prendre du temps. Les modules de sécurité vont donc disposer de deux informations secrètes, l'une courante et l'autre prête à prendre le relais. Dans le cas de la clé de transmission, l'entête du message de contrôle va contenir une indication permettant de savoir quel est la clé de transmission à utiliser. Un système simple est de définir une clé de transmission paire et une clé de transmission impaire. Le message de contrôle ECM contiendra un bit pour définir la parité et donc la clé à utiliser.

Afin d'éviter de donner du temps à des tiers malveillants pour retrouver l'information secrète, il est prévu selon une variante de l'invention, d'encrypter l'information secrète par une clé de libération. Cette clé est globale et utilisée quelque soit le groupe du module de sécurité. Ainsi chaque module de sécurité va recevoir un message encrypté par la clé de son groupe et encrypté par une clé globale.

Peu avant la mise en service de l'information secrète, par exemple la clé de transmission, le centre de gestion CG envoie un message encrypté par une clé commune à tous les modules de sécurité. A ce moment, chaque module sera capable de disposer de l'information secrète lui permettant de traiter les informations de sécurité correspondante.

## Revendications

1. Méthode de révocation de modules de sécurité destinés à recevoir des messages de sécurité diffusés à une pluralité de modules de sécurité, ledit modules de sécurité comprenant au moins une clé personnelle, cette méthode comprenant les étapes, préalablement à la révocation :
- division de l'ensemble des modules de sécurité en au moins deux groupes,
- détermination, pour chaque groupe, d'une clé asymétrique comprenant une clé publique et une pluralité de clés privées,
- chargement d'une clé privée par module de sécurité,
- transmission d'un message de sécurité par groupe, ledit message étant encrypté par la clé publique dudit groupe; la révocation consistant dans les étapes suivantes :
- envoi à chaque membre du même groupe que le module de sécurité à révoquer, à l'exception du ou des modules de sécurité à révoquer, d'une nouvelle clé privée correspondant à la clé publique d'un autre groupe, chaque clé privée étant encryptée par la clé personnelle dudit module de sécurité.

2. Méthode de révocation selon la revendication 1, utilisée dans un système de télévision à péage dans lequel le flux de données audio/vidéo est encrypté par des mots de contrôle (CW), ces derniers étant transmis dans des messages de contrôle (ECM), lesdits messages étant encryptés par une clé de transmission, **caractérisée en ce que** le message de sécurité contient la clé de transmission nécessaire au déchiffrement des messages de contrôle (ECM).

3. Méthode de révocation selon la revendication 1, utilisée dans un système de télévision à péage dans lequel le flux de données audio/vidéo est encrypté par des mots de contrôle (CW), ces derniers étant transmis dans des messages de contrôle (ECM), lesdits messages étant encryptés par une clé de transmission, **caractérisée en ce que** le message de sécurité contient une clé de surchiffrement des mots de contrôle (CW).

4. Méthode de révocation selon la revendication 1, **caractérisée en ce que** le message de sécurité contient des mises à jour du logiciel dudit module de sécurité.

5. Méthode de révocation selon la revendication 1, dans laquelle les modules de sécurité contiennent une clé commune, **caractérisée en ce que** le contenu du message de sécurité est surencrypté par une clé de libération, ladite clé de libération est encryptée par la clé commune des modules de sécurité et est transmise peu avant la mise en service du contenu du message de sécurité.

6. Méthode de révocation selon les revendications 1 à 5, **caractérisée en ce que** les membres d'un groupe révoqué sont réassignés à des groupes existants différents, à l'exception du ou des modules de sécurité à révoquer.

7. Méthode de révocation selon les revendications 1 à 5, **caractérisée en ce que** les membres d'un groupe révoqué sont réassignés à un nouveau groupe, à l'exception du ou des modules de sécurité à révoquer.
